# EUROPEAN PATENT APPLICATION

(11) **EP 1 442 670 A1**
(43) Date of publication of application: **04.08.2004**
(21) Application number: 04001682.6
(22) Date of filing: 27.01.2004
(51) Int. Cl.: A43B 5/14, A43B 13/12, B29D 31/518

(54) **Bicycle shoe sole**

(30) Priority: 03.02.2003 US 356718
(71) Applicant: Shimano Inc., Osaka 590-8577 (JP)
(72) Inventor: Kikuta, Junichi, Izumi-shi Osaka (JP); Nakashima, Yuji, Sakai-shi Osaka (JP); Nishimura, Tomohiko, Kaizuka-shi Osaka (JP)
(74) Representative: Hofmann, Harald

(57) **Abstract**

A bicycle shoe has an upper portion with a sole attached to the upper portion. The sole has upper and lower outer surfaces that define a toe section, an arch section, a ball section and a heel section with a longitudinal axis extending between the toe and heel sections. The ball section has a cleat attachment area surrounding at least one cleat attachment hole extending between the upper and lower outer surfaces. At least the arch section is configured with a transverse cross section having a center sole area with a first predetermined height, a medial side sole area with a second predetermined height and a lateral outside sole area with a third predetermined height, the first predetermined height being smaller than said second and third predetermined heights. Preferably, the sole upper and lower inner surfaces defining an interior cavity.

## Description

### BACKGROUND OF THE INVENTION

### Field of the Invention

This invention generally relates to a bicycle shoe. More specifically, the present invention relates to a sole of a bicycle shoe. Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle as well as the frame of the bicycle. One component that has been extensively redesigned is the bicycle shoe.

Conventionally, cycling shoe soles are formed, for example, of a resin or the like mixed with glass fiber chips for reinforcement. With the above construction, the sole is subjected to a strong bending force applied longitudinally of the shoe at a pedaling time. Therefore, the sole is formed solid to withstand the bending force. This is because an improved strength can hardly be expected of the sole having the glass fiber chips arranged in random orientation without fiber layers. Consequently, the sole itself is heavy, and the cyclist must ride a bicycle by pedaling hard with heavy soles, which has the disadvantage of exhausting the cyclist.

Moreover, weight has been reduced in shoe soles using a manufacturing method, in which a lightweight core material is surrounded by multiple fibrous layers and the core material and the fibrous layers are integrated using a resin material. For example, U.S. Patent No. 5,406,723 to Okajima illustrates a shoe sole produced in this manner. However, this layered shoe sole is still heavier than desired. There is a need for a very lightweight shoe sole for a shoe that is sufficiently durable to withstand a strong bending force applied longitudinally of the shoe.

In view of the above, it will be apparent to those skilled in the art from this disclosure that there exists a need for an improved bicycle shoe sole. This invention addresses this need in the art as well as other needs, which will become apparent to those skilled in the art from this disclosure.

### SUMMARY OF THE INVENTION

One object of the present invention is to provide a bicycle shoe sole that is lightweight.

Another object of the present invention is to provide a bicycle shoe sole, which is very light weight and yet has a sufficient durability against a strong bending force acting longitudinally of the shoe.

Another object of the present invention is to provide a bicycle shoe sole that is relatively simple to manufacture.

The foregoing objects can basically be attained by providing a bicycle shoe sole that comprises upper and lower outer surfaces, and upper and lower inner surfaces defining an interior cavity. The upper and lower outer surfaces define a toe section, an arch section, a ball section and a heel section with a longitudinal axis extending between the toe and heel sections. The interior cavity includes a transverse cross section having a center sole area with a first predetermined height, a medial side sole area with a second predetermined height and a lateral outside sole area with a third predetermined height. The first predetermined height is smaller than the second and third predetermined heights. The ball section has a cleat attachment area surrounding at least one cleat attachment hole extending between the upper and lower outer surfaces.

The foregoing objects can further be attained by providing a bicycle shoe sole that basically comprises upper and lower outer surfaces defining a toe section, an arch section, a ball section and a heel section with a longitudinal axis extending between the toe and heel sections. At least the arch section is configured with a transverse cross section having a center sole area with a first predetermined height, a medial side sole area with a second predetermined height and a lateral outside sole area with a third predetermined height. The first predetermined height is smaller than the second and third predetermined heights. The ball section has a cleat attachment area surrounding at least one cleat attachment hole extending between the upper and lower outer surfaces.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:

Figure 1 is a side elevational view of a bicycle shoe with a bicycle shoe sole in accordance with a first embodiment of the present invention;

Figure 2 is an exploded perspective view of a cleat assembly, the bicycle shoe sole illustrated in Figure 1 in accordance with the first embodiment of the present invention and an inner sole;

Figure 3 is a top plan view of the bicycle shoe sole illustrated in Figures 1 and 2 in accordance with the first embodiment of the present invention;

Figure 4 is a bottom plan view of the bicycle shoe sole illustrated in Figures 1-3 in accordance with the first embodiment of the present invention;

Figure 5 is a first transverse cross-sectional view of the bicycle shoe sole illustrated in Figures 1-4 as viewed along section line 5-5 of Figure 3;

Figure 6 is a second transverse cross-sectional view of the bicycle shoe sole illustrated in Figures 1-4 as viewed along section line 6-6 of Figure 3;

Figure 7 is a third transverse cross-sectional view of the bicycle shoe sole illustrated in Figures 1-4 as viewed along section line 7-7 of Figure 3;

Figure 8 is a fourth transverse cross-sectional view of the bicycle shoe sole illustrated in Figures 1-4 as viewed along section line 8-8 of Figure 3;

Figure 9 is a fifth transverse cross-sectional view of the bicycle shoe sole illustrated in Figures 1-4 as viewed along section line 9-9 of Figure 3;

Figure 10 is a sixth transverse cross-sectional view of the bicycle shoe sole illustrated in Figures 1-4 as viewed along section line 10-10 of Figure 3;

Figure 11 is a seventh transverse cross-sectional view of the bicycle shoe sole illustrated in Figures 1-4 as viewed along section line 11-11 of Figure 3;

Figure 12 is an eighth transverse cross-sectional view of the bicycle shoe sole illustrated in Figures 1-4 as viewed along section line 12-12 of Figure 3;

Figure 13 is a ninth longitudinal cross-sectional view of the bicycle shoe sole illustrated in Figures 1-4 as viewed along section line 13-13 of Figure 3;

Figure 14 is a tenth longitudinal cross-sectional view of the bicycle shoe sole illustrated in Figures 1-4 as viewed along section line 14-14 of Figure 3;

Figure 15 is a top plan view of a core material that forms part of the structure of the bicycle shoe sole in accordance with the first embodiment of the present invention;

Figure 16 is a partial diagrammatic transverse cross-sectional view of a partially formed portion of the bicycle shoe sole of Figures 1-4 to illustrate the fiber layers that form the ball section at a time prior to molding, in which the dimensions are exaggerated to show the fiber layers;

Figure 17 is a partial diagrammatic transverse cross-sectional view of a partially formed portion of the bicycle shoe sole of Figures 1-4 to illustrate the fiber layers that form a portion of the arch section at a time prior to molding, in which the dimensions are exaggerated to show the fiber layers; and

Figure 18 is a partial diagrammatic longitudinal cross-sectional view of a partially formed portion of the bicycle shoe sole of Figures 1-4 to illustrate how the number of fiber layers in the bicycle shoe sole of Figures 1-17 varies between toe, ball, arch and heel sections of the bicycle shoe sole, in which the dimensions are exaggerated to show the fiber layers.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

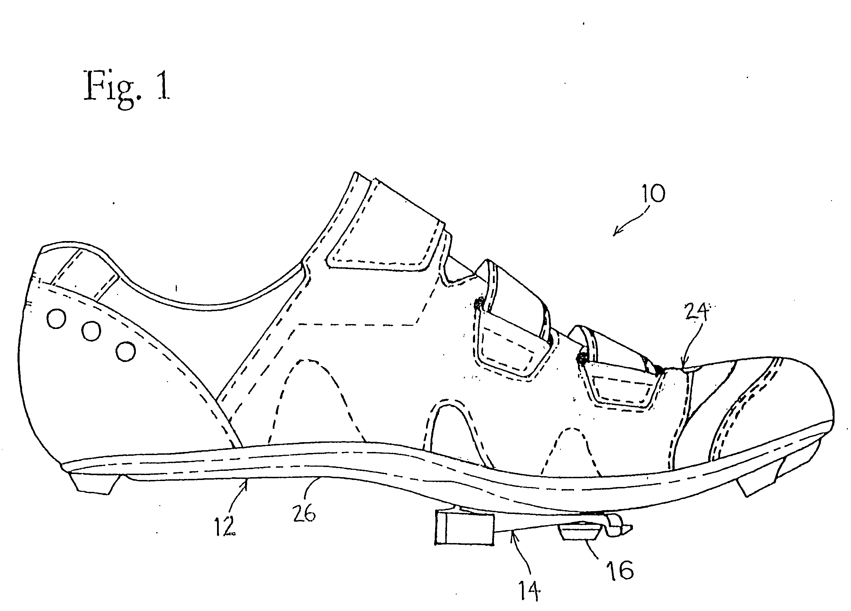

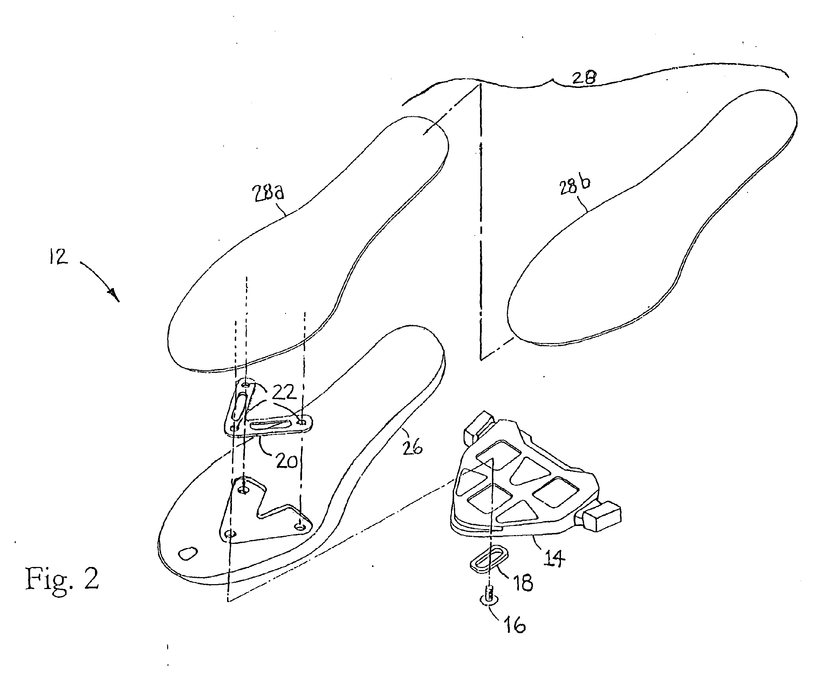

Referring initially to Figures 1 and 2, a bicycle shoe 10 is illustrated with a bicycle shoe sole 12 in accordance with a first embodiment of the present invention. The bicycle shoe 10 has a cleat 14 attached thereto by a plurality of fasteners 16, a plurality of washers 18 and a mounting plate 20 with a plurality of holes 22 that receive the fasteners 16. Only one fastener 16 and one washer 18 are shown for ease of illustration. The number of washers 18 and fasteners 16 can be varied as needed and/or desired. The cleat 14 is designed to be used with clipless or step-in pedal (not shown). The precise construction of the cleat 14 will not be discussed or illustrated in detail herein, since the basic construction of the cleat 14 is old and well known in the prior art. Moreover, it should be apparent to those skilled in the art from this disclosure that the present invention should not be limited to the precise construction of the non-claimed portions of the bicycle shoe 10 and the cleat 14 as discussed and illustrated herein. For example, various types of cleats can be used with the bicycle shoe 10 of the present invention with slight modifications to the bicycle shoe 10.

The bicycle shoe 10 illustrated in Figure 1 is a left bicycle shoe. Of course, the right bicycle shoe would be substantially identical to the left bicycle shoe illustrated in Figure 1, but substantially a mirror image thereof. Therefore, the bicycle shoe 10 as used herein refers to either a left bicycle shoe or a right bicycle shoe, and the drawings and description used herein will not differentiate therebetween.

Basically, the bicycle shoe 10 has a shoe upper portion 24 and the bicycle shoe sole 12. The bicycle shoe sole 12 includes an outer shoe sole 26 and an inner shoe sole or cushion 28, as shown in Figure 2. The outer shoe sole 26 is fixedly attached to the shoe upper portion 24 in a conventional manner. The inner shoe sole 28 is located within the bicycle shoe 10 and overlies the outer shoe sole 26. The inner shoe sole 28 can be constructed of one or more separate flexible layers (e.g., two layers 28a and 28b as shown in Figure 2). The precise construction of the shoe upper portion 24, and the inner shoe sole 28 will not be discussed or illustrated in detail herein, since the basic construction of a bicycle shoe is old and well-known in the prior art. Moreover, it should be apparent to those skilled in the art from this disclosure that the present invention should not be limited to the precise construction of the non-claimed portion of bicycle shoe 10 as discussed and illustrated herein.

The outer shoe sole 26 is a hard, rigid member that is relatively inflexible. Preferably, the outer shoe sole 26 is constructed of a plurality of overlapping carbon fiber layers bound together by a resin material. Alternatively, the outer shoe sole 26 is constructed of a plurality of carbon fiber layers and a plurality of glass fiber layers arranged in an overlapping fashion with the carbon fiber layers and the glass fiber layers being bound together by a resin material. The resin material can be previously impregnated into the carbon fiber layers and/or glass fiber layers. Alternatively, the outer shoe sole 26 can be constructed of a plurality of carbon fiber layers and/or glass layers that are not previously impregnated with a resin material, and a resin material can be added to bind these carbon fiber layers and/or glass fiber layers together.

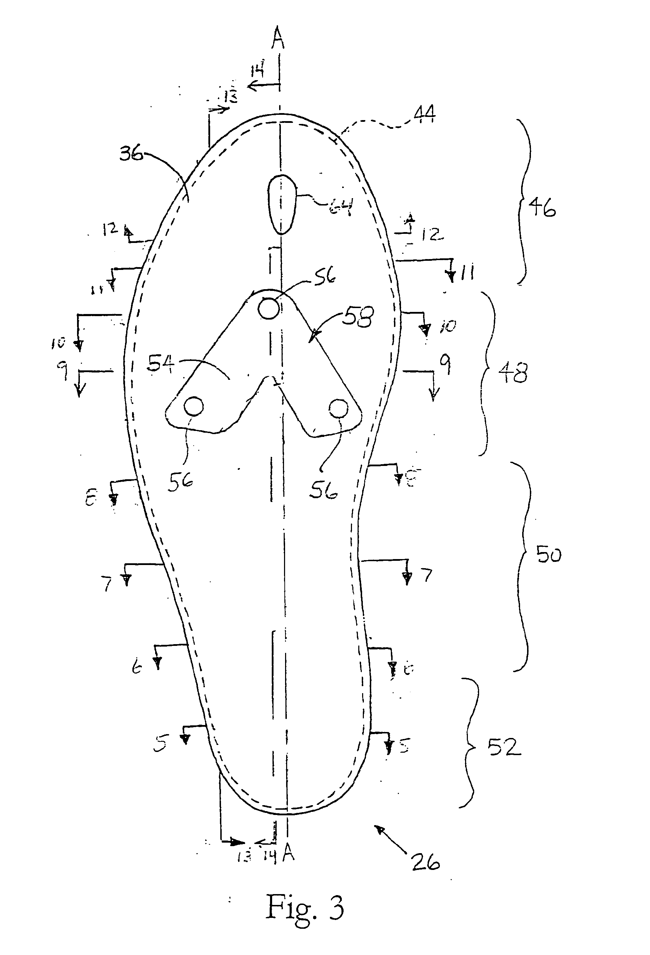

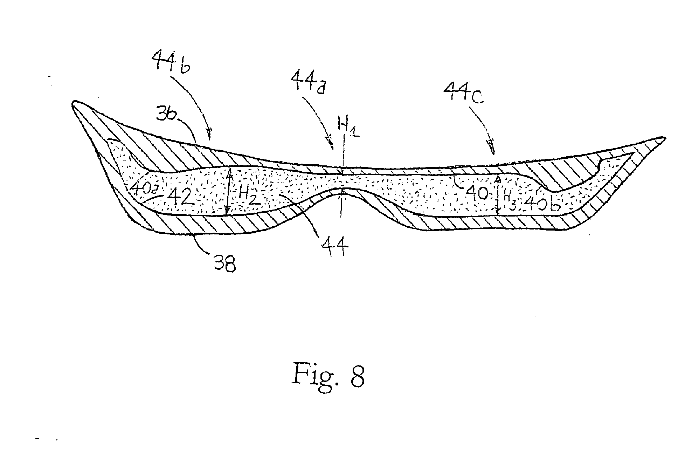

Referring now to Figures 3-14, the outer shoe sole 26 is illustrated in more detail. Basically, the outer shoe sole 26 has an upper outer surface 36, a lower outer surface 38, an upper inner surface 40 and a lower inner surface 42. The upper and lower inner surfaces 40 and 42 define an interior cavity 44. As shown in Figures 3, 4 and 13, the upper and lower outer surfaces 36 and 38 define a toe section 46, a ball section 48, an arch section 50 and a heel section 52 with a longitudinal axis A extending between the toe and heel sections 46 and 52. Preferably, as explained below, the ball section 48 is formed of fifteen layers of the carbon fiber layers and/or the glass fiber layers. The toe section 46, the arch section 50 and the heel section 52, on the other hand, are preferably formed of ten layers of the carbon fiber layers and/or the glass fiber layers, with the portions of the toe section 46 and the arch section 50 that are adjacent to the ball section 48 being formed to gradually transition from fifteen layers down to ten layers. The toe section 46 preferably has at least one hole 64 therethrough that extends between the upper and lower outer surfaces 36 and 38. As explained below in more detail, the at least one hole 64 can be drilled through the outer shoe sole 26 after the outer shoe sole 26 is molded.

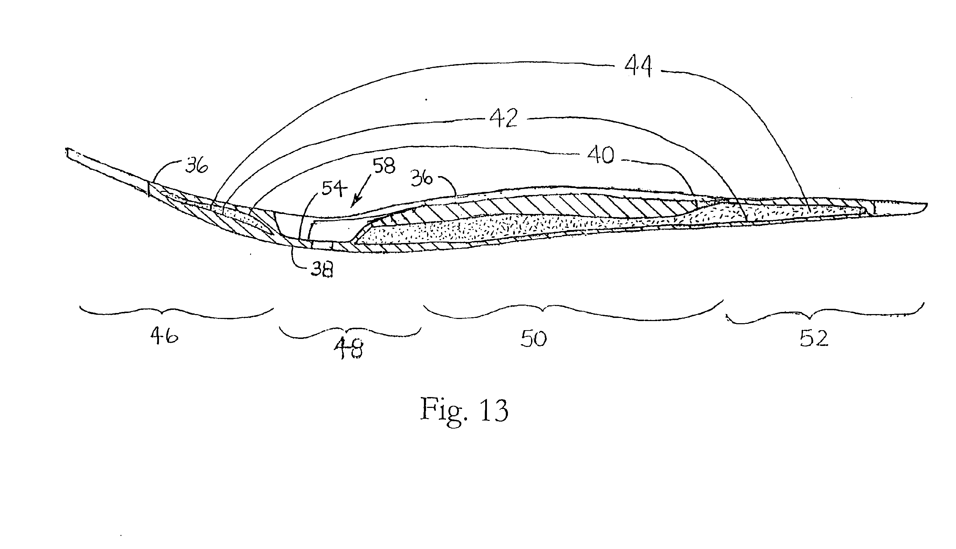

As seen in Figures 3 and 13, the ball section 48 has a cleat attachment area 54 surrounding a plurality of cleat attachment holes 56 that extend between the upper and lower outer surfaces 36 and 38. A recess portion 58 in the upper outer surface 36 of the outer shoe sole 26 defines the cleat attachment area 54. This recess portion 58 is preferably V-shaped and does not include the interior cavity 44. Rather, the layers of material and the resin forming the cleat attachment area 54 are stacked together between the upper and lower outer surfaces 36 and 38 such that the interior cavity 44 does not extend into the cleat attachment area 54.

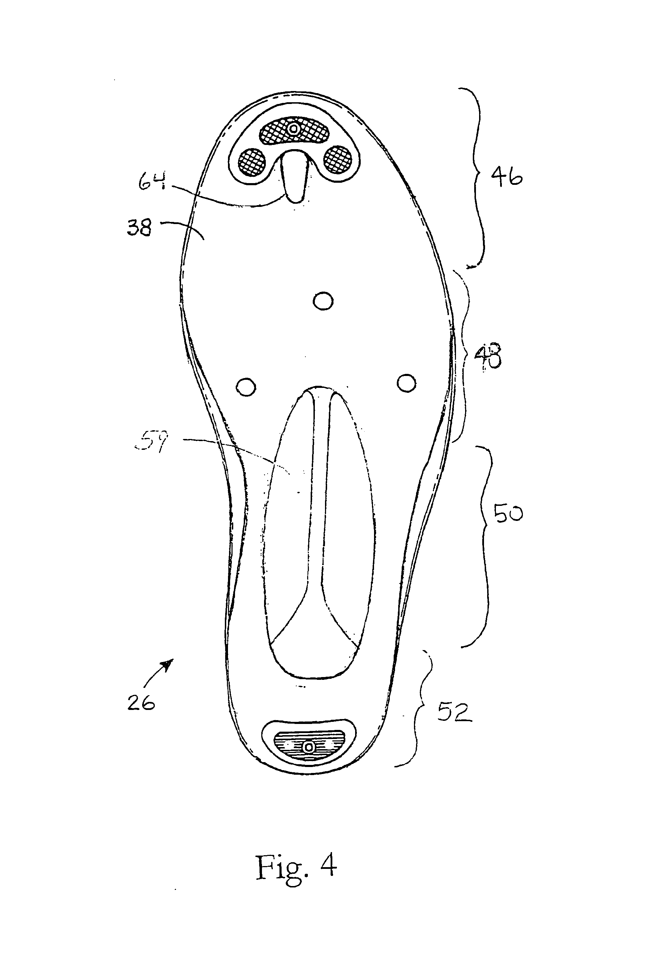

The interior cavity 44 has a length that extends between the heel and toe sections 52 and 46. Preferably, the interior cavity 44 is a continuous cavity having a single large section that extends through the heel and arch sections 52 and 50, two smaller narrow sections that extend through the ball section 48 and into the toe section 46. In other words, the interior cavity 44 extends as a single section through the heel and arch sections 52 and 50, and diverges into at least two sections that extend through the ball section 48 and into the toe section 46. The interior cavity 44 preferably has a transverse cross section that varies along the longitudinal axis A between the heel and toe sections 52 and 46. Certain transverse cross section areas of the outer shoe sole 26 have a W-shape formed along the lower outer surface 38. This W-shape is at least partially formed by a recess 59 in the lower outer surface 38, as shown in Figure 4.

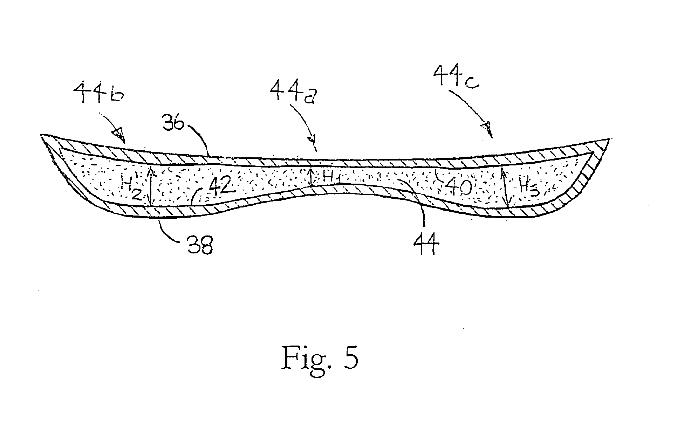

Referring now to Figure 5, a transverse cross sectional view of the outer shoe sole 26 is shown along section line 5-5 of Figure 3. In other words, Figure 5 shows a cross section in the heel section 52. The upper and lower inner surfaces 40 and 42 define the interior cavity 44. The transverse cross section of the interior cavity 44 has a center sole area 44a, a medial side sole area 44b and a lateral outside area 44c. The center sole area 44a has a first minimum predetermined height H₁. The medial side sole area 44b has a second maximum predetermined height H₂. The lateral outside sole area 44c has a third maximum predetermined height H₃. The predetermined heights H₁, H₂ and H₃ of the interior cavity 44 are measured between the upper and lower inner surfaces 40 and 42. Although the predetermined heights H₁, H₂ and H₃ vary in a continuous manner along the longitudinal direction throughout the heel section 52, the height H₁ is always less than H₂ and also always less than H₃ as seen in Figure 5. Moreover, Figure 5 shows that the lower inner and lower outer surfaces 42 and 38 define a generally W-shaped transverse cross section therebetween. The upper outer and upper inner surfaces 36 and 40 define a slightly bowed U-shaped transverse cross section therebetween.

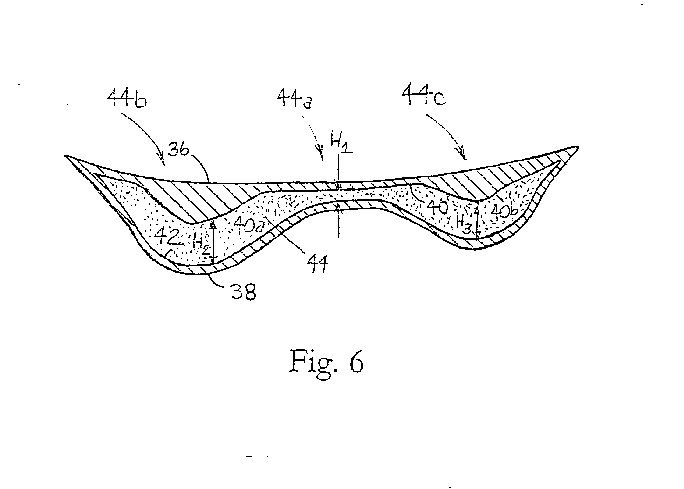

Referring now to Figures 6, 7 and 8, transverse cross sectional views of the arch section 50 of the outer shoe sole 26 are shown along section lines 6-6, 7-7 and 8-8 of Figure 3, respectively. As seen in each of these figures, the upper inner surface 40 of the arch section 50 of the outer shoe sole 26 includes a pair longitudinally extending ribs 40a and 40b that are laterally spaced apart. The longitudinally extending ribs 40a and 40b preferably extend at least along entire the arch section 50. More preferably, the longitudinally extending ribs 40a and 40b extend along the ball section 48 to the heel section 52. Thus, the interior cavity 44 has, at least in the arch section 50, a transverse cross section with a center sole area 44a, a medial side sole area 44b and a lateral outside sole area 44c. The center sole area 44a has a first minimum predetermined height H₁. The medial side sole area 44b has a second maximum predetermined height H₂. The lateral outside sole area 44c has a third maximum predetermined height H₃. The predetermined heights H₁, H₂ and H₃ are measured between the upper and lower inner surfaces 40 and 42. As seen in Figures 6, 7 and 8, the predetermined heights H₁, H₂ and H₃ vary in a continuous manner along the longitudinal direction through the arch section 50. However, the predetermined height H₁ is always less than the predetermined heights H₂ and H₃. The longitudinally extending ribs 40a and 40b are preferably formed by a plurality of carbon fiber layers that are stacked to form the desired shape of the longitudinally extending ribs 40a and 40b. The vertical thickness of the longitudinally extending ribs 40a and 40b can vary as needed and/or desired. Each of the Figures 6, 7 and 8 shows that the lower inner and lower outer surfaces 42 and 38 define a generally W-shaped transverse cross section therebetween.

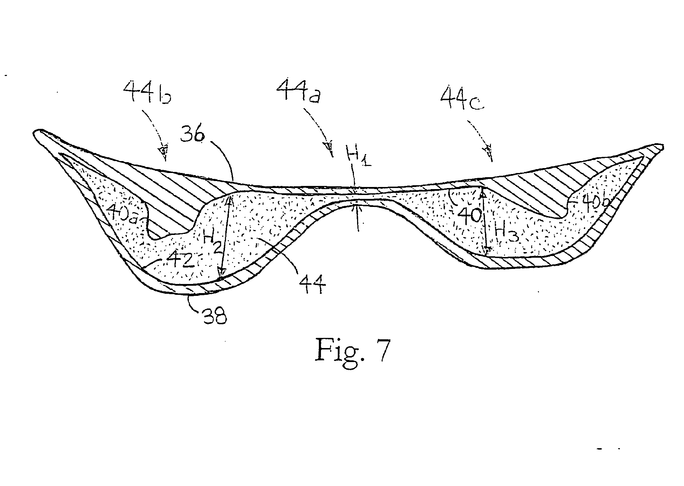

Moreover, the upper outer and upper inner surfaces 36 and 40 define a slightly bowed U-shaped transverse cross section therebetween. Figures 6-8 also show that the rib 40a has a maximum vertical thickness measured between the upper outer surface 36 and the upper inner surface 40 that is greater than the first minimum predetermined height H₁. The rib 40b has a maximum vertical thickness measured between the upper outer surface 36 and the upper inner surface 40 that is greater than the first minimum predetermined height H₁. Figure 7 shows the transverse cross section along line 7-7 of Figure 3, which is located in the arch section 50. The rib 40a has a maximum vertical thickness measured between the upper outer surface 36 and the upper inner surface 40 that is less than the second maximum predetermined height H₂. The maximum vertical thickness of the rib 40b is less than the third maximum predetermined height H₃.

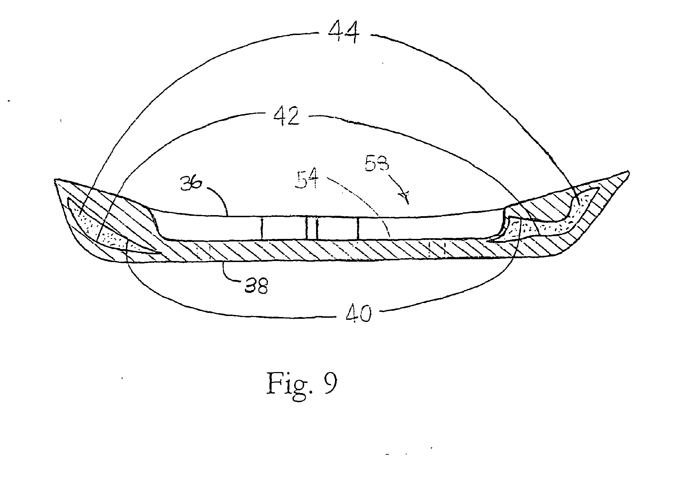

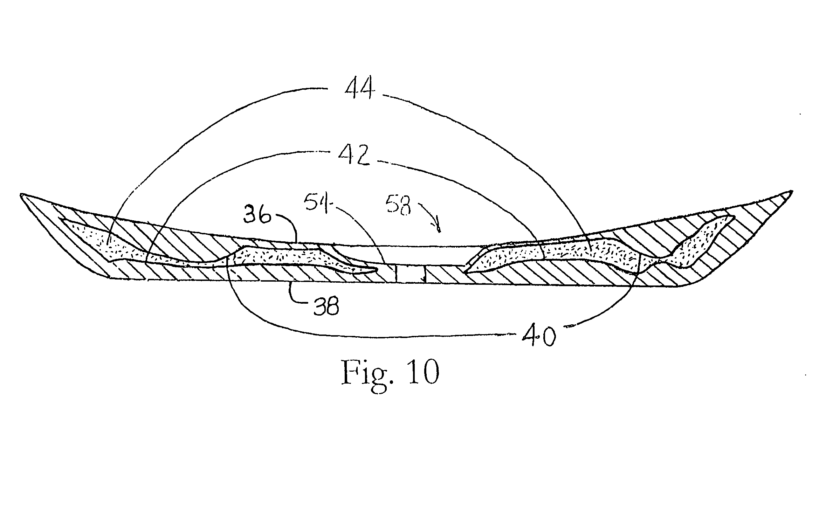

Referring now to Figures 9 and 10, transverse cross-sectional views of the ball section 48 of the outer shoe sole 26 are shown along section lines 9-9 and 10-10 of Figure 3, respectively. As described above, the ball section 48 includes the recess portion 58 that defines the cleat attachment area 54. As seen in Figures 9 and 10, a portion of the outer shoe sole 26 where the cleat attachment area 54 is formed does not include the cavity 44. Accordingly, in the ball section 48, the interior cavity 44 is diverged into two smaller sections such that the cleat attachment area 54 is located between these two smaller sections of the cavity 44, as seen in Figures 9 and 10.

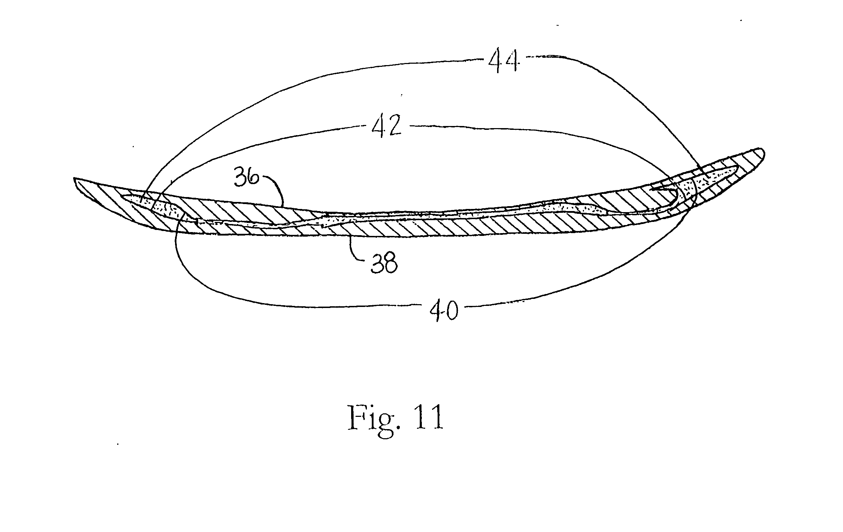

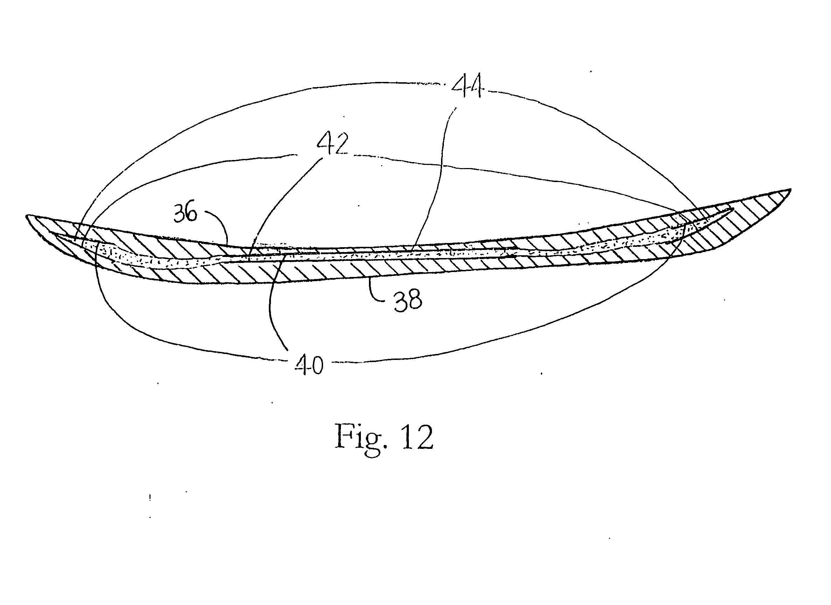

Referring now to Figures 11 and 12, transverse cross-sectional views of the toe section 46 of the outer shoe sole 26 are shown along section lines 11-11 and 12-12 of Figure 3, respectively. As seen in Figures 11 and 12, the interior cavity 44 preferably extends continuously through the transverse direction of the outer shoe sole 26.

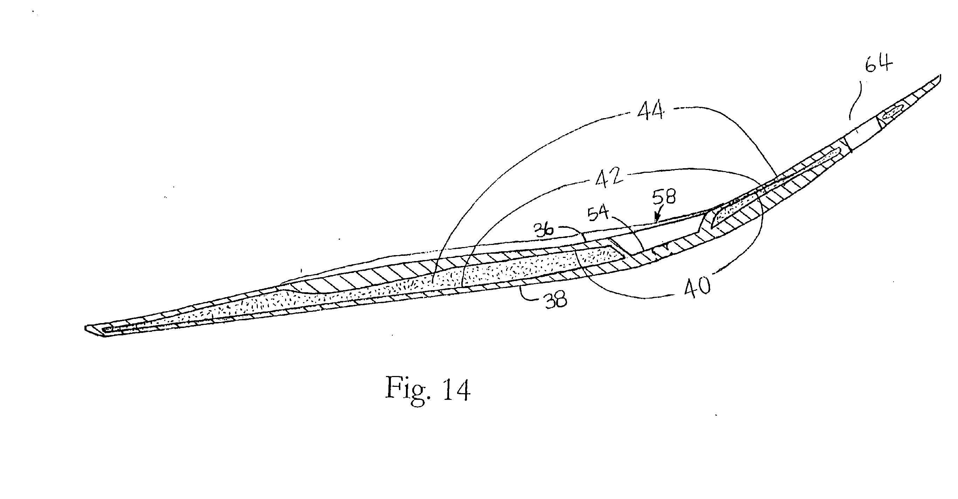

Referring now to Figures 13 and 14, longitudinal cross-sectional views of the outer shoe sole 26 are shown along section lines 13-13 and 14-14 of Figure 3, respectively. As seen in Figure 13, the interior cavity 44 longitudinally extends from the heel section 52 to the toe section 46 except under the cleat attachment area 54. Moreover, as seen in Figure 14, the at least one hole 64 is formed so that the at least one hole 64 extends between the upper and lower outer surfaces 36 and 38 in the toe section 46.

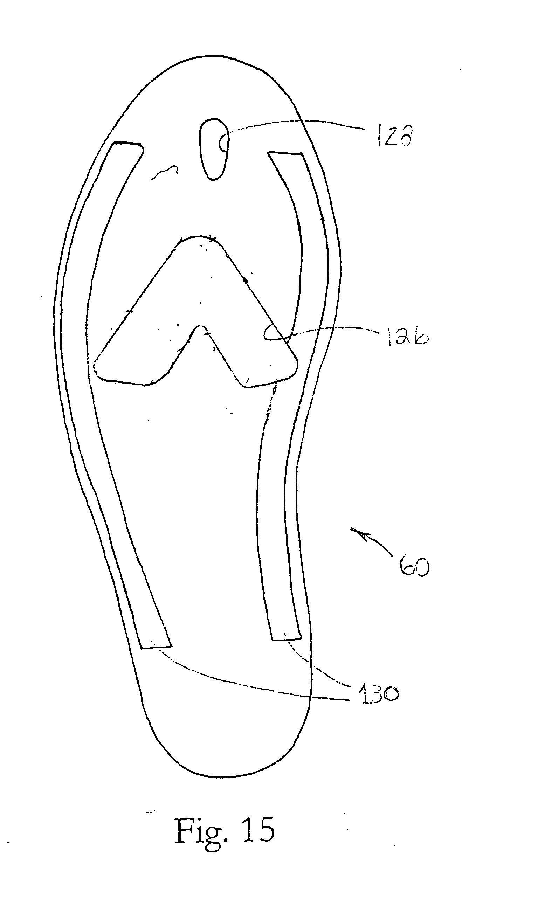

Referring now to Figure 15, a core material 60 is shown. In the illustrated embodiment of the invention, the interior cavity 44 of the outer shoe sole 26 has a lightweight core material 60 therein. Basically, the core material 60 includes a first opening 126, a second opening 128 and a pair of receiving recesses 130. The core material is used in combination with layers of carbon fibers and/or glass fibers, as mentioned above, to form the outer shoe sole 26. The first opening 126 is arranged such that fiber layers above and below the first opening 126 can be molded together in the area of the first opening 126. This molded area defines the cleat attachment area 54. The cleat attachment area 54 is free of the core material 60. The core material 60 can be, for example, polyurethane foam. However, the core material is not limited to a foam material. For example, a high specific gravity material can be used instead of polyurethane foam. Preferably, the core material 60 is basically used to form the interior cavity 44 during the production of the outer shoe sole 26. Moreover, the interior cavity 44 of the outer shoe sole 26 can be constructed in such a manner that the interior cavity 44 is empty, i.e., the interior cavity 44 is an air space. For example, the outer shoe sole 26 can be formed using an air tube such that the interior cavity 44 of the outer shoe sole 26 is empty.

The core material 60 is preferably preformed prior to the outer shoe sole 26 is molded so that the core material 60 has a generally W-shaped transverse cross section. Of course, it will be apparent to those skilled in the art from this disclosure that the core material 60 can be arranged to have a flat cross section. In any event, the core material 60 deforms in accordance with the shape of the upper and lower inner surfaces 40 and 42 in the molding process of the outer shoe sole 26.

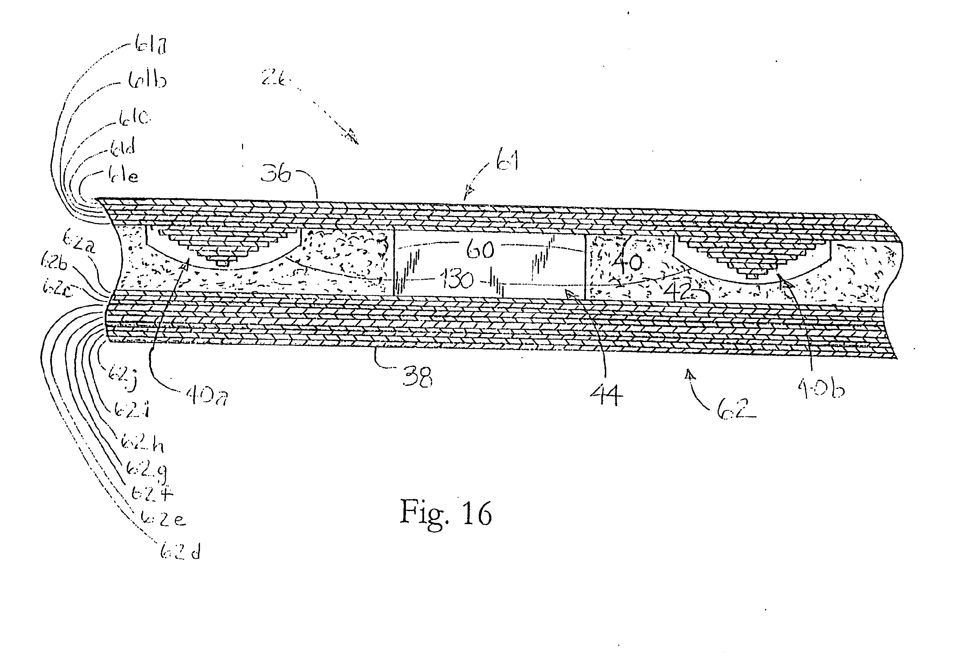

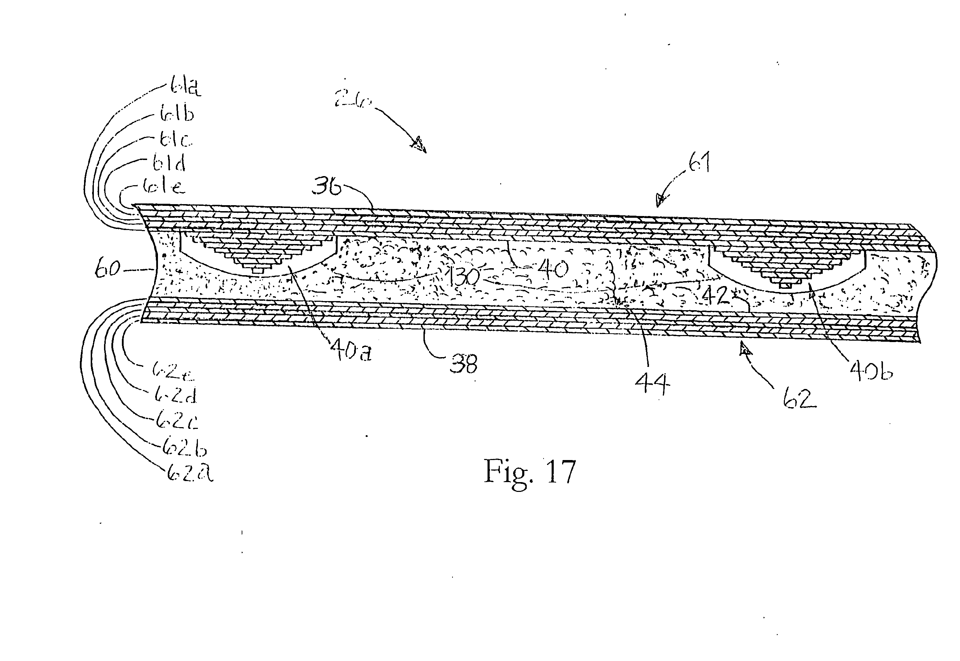

Figures 16, 17 and 18 show diagrammatic transverse cross sectional views of the outer shoe sole 26 before the outer shoe sole 26 is molded. As seen in Figure 16, each receiving recess 130 of the core material 60 is arranged and configured to receive one of the ribs 40a or 40b. Each of the ribs 40a and 40b are formed by molding a stack of carbon fiber sheets and/or glass fiber sheets, as shown in Figures 16 and 17. In the molding process of the outer shoe sole 26, the receiving recesses 130 are deformed in a great extent so as to fit with the shape of the ribs 40a or 40b. Of course, it will be apparent to those skilled in the art from this disclosure that the receiving recesses 130 can be omitted in order to achieve the same effect of the present invention. In other words, even though the core material 60 does not include the receiving recesses 130, the core material will deform so as to fit with the shape of the ribs 40a or 40b.

As seen in Figures 16, 17 and 18, the interior cavity 44 divides the outer shoe sole 26 into an upper layered portion 61 and a lower layered portion 62. The upper outer surface 36 and the upper inner surface 40 define the upper layered portion 61. The lower outer surface 38 and the lower inner surface 42, on the other hand, define the lower layered portion 62. In the illustrated embodiment, the upper layered portion 61 includes layers 61a-61e (five layers), while the lower layered portion 62 includes layers 62a-62j (ten layers). In one preferred embodiment, all of the layers 61a-61e and 62a-62j are constructed of carbon fiber layers bound together by a resin material. Thus, the upper outer surface 36 is part of the upper layered portion 61 that includes at least one carbon fiber layer located adjacent the upper outer surface 36. The upper inner surface 40 is part of the upper layered portion 61 that includes at least one carbon fiber layer located adjacent the upper inner surface 40. Likewise, the lower outer surface 38 is part of the lower layered portion 62 that includes at least one carbon fiber layer located adjacent the lower outer surface 38. The lower inner surface 42 is part of the lower layered portion that includes at least one carbon fiber layer located adjacent the lower inner surface 42.

In another preferred embodiment, some of the layers 61a-61e and 62a-62j are constructed of carbon fiber layers and some of the layers 61a-61e and 62a-62j are constructed of glass fiber layers. While various combinations of carbon fiber layers and glass fiber layers are possible, it is preferably to have the layers closest to the upper and lower outer surfaces 36 and 38 constructed of carbon fiber layers and the layers closest to the upper and lower inner surfaces 40 and 42 constructed of glass fiber layers. For example, the layers 61d, 61e, 62i and 62j are constructed of carbon fiber layers and the layers 61 a-61 c and 62a-62h are constructed of glass fiber layers.

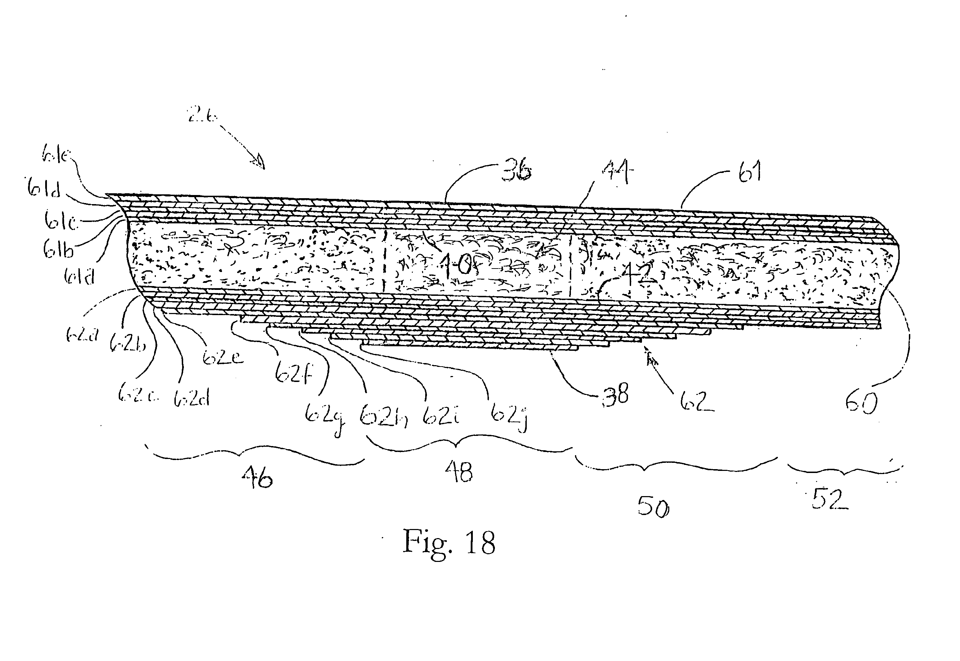

Referring now to Figure 18, the ball section 48 is preferably formed of all fifteen layers 61a-61e and 62a-62j. The toe section 46, the arch section 50 and the heel section 52, on the other hand, are preferably formed of ten layers 61 a-61 e and 62a-62e, with the portions of the toe section 46 and the arch section 50 that are adjacent to the ball section 48 being partially formed of the layers 62f-62j to gradually transition from the ball section 48 to the toe section 46 and the arch section 50.

Now, one method of manufacturing the outer shoe sole 26 of the present invention will be discussed. First, the core material 60 is produced to form the desired shape of the interior cavity 44. In the illustrated embodiment, the core material 60 is a foam material that has the two receiving recesses 130, which correspond to the shape of the longitudinally extending ribs 40a and 40b. The core material 60 also has the first and second holes 126 and 128, which correspond to the cleat attachment area 54 and an opening in the outer shoe sole 26, respectively.

Next, the portion of the outer shoe sole 26 that overlies the core material 60 is formed. This preferred method uses a plurality of fiber layers or sheets that are formed of either all carbon fiber layers or sheets, or a combination of carbon fiber layers or sheets and glass fiber layers or sheets. A thermosetting resin such as phenol resin is used for impregnating these fiber layers or sheets. Preferably, these fiber layers are previously impregnating with the resin. Also preferably, when carbon fibers are used in the previously impregnated fiber layers, reinforcing carbon fibers extending in one direction are used in the fiber layers.

First, the carbon fiber layers forming the longitudinally extending ribs 40a and 40b (e.g., carbon fiber layers as shown in Figure 17) are stacked and placed in the receiving recesses 130 of the core material 60 to form the desired shape of the longitudinally extending ribs 40a and 40b. The vertical thickness of the longitudinally extending ribs 40a and 40b can vary as needed and/or desired depending on the lengths and number of the carbon fiber layers used to make the longitudinally extending ribs 40a and 40b. Of course, one or more of the fiber layers used to make the longitudinally extending ribs 40a and 40b can be a glass fiber layer or sheet. In fact, all of the fiber layers used to make the longitudinally extending ribs 40a and 40b can be a glass fiber layer.

Then, the fiber layers 61a-61e and 62a-62j, which are the previously impregnated fiber layers 61a-61e and 62a-62j, are applied to upper and lower surfaces of the core material 60 to form the upper layered portion 61 and the lower layered portion 62 with the interior cavity 44 being filled with the core material 60. The fiber layers or sheets 61a-61e and 62a-62j are formed of either all carbon fiber layers or sheets, or a combination of carbon fiber layers or sheets and glass fiber layers or sheets. A thermosetting resin such as phenol resin is used for impregnating these fiber layers or sheets. Preferably, these fiber layers 61a-61e and 62a-62j are previously impregnating with the resin. Also preferably, when carbon fibers are used in the previously impregnated fiber layers 61a-61e and 62a-62j, reinforcing carbon fibers extending in one direction are used in the fiber layers 61a-61e and 62a-62j. In these prior steps, the fiber layers 61a-61e are stacked successively upwardly from the core material 60 to constitute the upper layered portion 61 of the outer shoe sole 26. The fiber layers 62a-62j are arranged successively downwardly from the lower surface of the core material 60 to constitute the lower layered portion 62 of the outer shoe sole 26.

The outer shoe sole 26 having the various fiber layers overlying the core material 60 is placed in dies and shaped by pressurization and heating. Consequently, the outer shoe sole 26 is completed when the impregnated resin of the previously impregnated fiber layers forming the ribs 42a and 42b, the fiber layers 61a-61e and 62a-62j become hardened by the heat. When phenol resin is used as the impregnated resin, the heating temperature is 140° C. and the pressing time about 2 hours, for example. The pressure is applied to a degree to prevent expansion of the core material 60. At this time, secondary foaming of the polyurethane resin of the core material 60 is prevented. The fiber sheets can have, for example, a thickness of about 0.3 mm to about 0.35 mm before heating and a thickness of about 0.2 mm after heating. The base resin of the fiber sheets can be, for example, an epoxy resin. The dies are shaped such that the outer shoe sole 26 will have a shape illustrated in Figures 3-14 after the pressurization and heating. Of course it will be apparent to those skilled in the art from this disclosure that the transverse and/or longitudinal cross sections of the outer shoe sole 26 after the pressurization and heating will not be identical to the cross sections shown in Figures 5-14. In other words, the fiber layers and the core material 60 will be deformed in unpredictable manner in the course of pressurization and heating. In any event, it will be apparent to those skilled in the art from this disclosure that the outer shoe sole 26 will achieve the same effects as the present invention as long as it has generally similar cross sectional shapes as the cross sections shown in Figures 5-14.

Now, the cleat attachment holes 56 that extend between the upper and lower outer surfaces 36 and 38 are formed by drilling.

In the illustrated embodiment, a thermosetting phenol resin was used with previously impregnated fiber layers. It is also possible to use a thermoplastic resin or other resins that harden with the lapse of time. The term "resin" includes both synthetic and natural resins.

As used herein, the following directional terms "forward, rearward, above, downward, vertical, horizontal, below and transverse" as well as any other similar directional terms refer to those directions of a shoe that is configures in accordance with the present invention. Accordingly, these terms, as utilized to describe the present invention should be interpreted relative to a shoe equipped with a shoe sole in accordance with the present invention.

The terms of degree such as "substantially", "about" and "approximately" as used herein mean a reasonable amount of deviation of the modified term such that the end result is not significantly changed. These terms should be construed as including a deviation of ± 5% of the modified term if this would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle shoe sole comprising:
upper and lower outer surfaces defining a toe section, an arch section, a ball section and a heel section with a longitudinal axis extending between said toe and heel sections,
at least one of said sections, in particular said arch section being configured with a transverse cross section having a center sole area with a first predetermined height, a medial side sole area with a second predetermined height and a lateral outside sole area with a third predetermined height, said first predetermined height being smaller than said second and third predetermined heights,
said ball section having a cleat attachment area surrounding at least one cleat attachment hole extending between said upper and lower outer surfaces.

2. The bicycle shoe sole according to claim 2, further comprising
upper and lower inner surfaces defining an interior cavity.

3. The bicycle shoe sole according to claim 2, wherein
said interior cavity is configured in at least one of said sections with a transverse cross section having a center sole area with a first predetermined cavity height, a medial side sole area with a second predetermined cavity height and a lateral outside sole area with a third predetermined cavity height, said first predetermined cavity height being smaller than said second and third predetermined cavity heights.

4. The bicycle shoe sole according to any one of claims 2 to 3, wherein
said interior cavity is filled with a core material.

5. The bicycle shoe sole according to any one of claims 1 to 4, wherein
said upper outer surface of said shoe sole is part of an upper layered portion that includes at least one carbon fiber layer located adjacent said upper outer surface, and
said lower outer surface of said shoe sole is part of a lower layered portion that includes at least one carbon fiber layer located adjacent said lower outer surface.

6. The bicycle shoe sole according to any one of claims 1 to 5, wherein
said upper inner surface of said shoe sole is part of an upper layered portion that includes at least one carbon fiber layer located adjacent said upper inner surface, and
said lower inner surface of said shoe sole is part of a lower layered portion that includes at least one carbon fiber layer located adjacent said lower inner surface.

7. The bicycle shoe sole according to any one of claims 1 to 6, wherein
said upper inner surface of said shoe sole is part of an upper layered portion that includes at least one glass fiber layer located adjacent said upper inner surface, and
said lower inner surface of said shoe sole is part of a lower layered portion that includes at least one glass fiber layer located adjacent said lower inner surface.

8. The bicycle shoe sole according to any one of claims 1 to 7, wherein
said cleat attachment area defines a recess portion in said upper outer surface of said shoe sole.

9. The bicycle shoe sole according to any one of claims 1 to 8, wherein
said upper inner surface of said shoe sole includes a pair longitudinally extending ribs that are laterally spaced apart.

10. The bicycle shoe sole according to any one of claims 1 to 9, wherein
at least of one said upper and lower outer surfaces being configured to define a longitudinal extending recess.

11. A bicycle shoe sole comprising:
upper and lower outer surfaces defining a toe section, an arch section, a ball section and a heel section with a longitudinal axis extending between said toe and heel sections,
upper and lower inner surfaces defining an interior cavity with a transverse cross section,
at least of one said upper and lower outer surfaces being configured to define a longitudinal extending recess,
said ball section having a cleat attachment area surrounding at least one cleat attachment hole extending between said upper and lower outer surfaces.
